# EUROPEAN PATENT APPLICATION

(11) **EP 1 372 269 A1**
(43) Date of publication of application: **17.12.2003**
(21) Application number: 02254071.0
(22) Date of filing: 12.06.2002
(51) Int. Cl.: H04B 1/707

(54) **Improved spread spectrum receiver rake**

(71) Applicant: Agilent Technologies, Inc. - a Delaware corporation -, Palo Alto, CA 94303-0870 (US)
(72) Inventor: Lugil, Nico c/o Agilent Techn.Belgium S.A/N.V, B3110 Rotselaar (BE)
(74) Representative: Coker, David Graeme

(57) **Abstract**

The present invention is related to a rake receiver for searching, tracking and combining multipath signals in a spread spectrum transmission, characterised in that it further comprises a plurality of generic fingers (11) arranged to perform any of functions selected from the group consisting of searching, tracking and combining a multipath signal.

## Description

### Field of the invention

The present invention is related to a receiver for IMT-2000 spread-spectrum signals, more particularly to a novel structure for a rake for such a receiver.

### State of the art

When a signal is transmitted over a wireless channel, reflections of this transmitted signal on different objects will lead to identical signals with various and variable strength and phase. The receiver can and will receive these different reflections. Not all reflections will arrive at the same time (i.e. the path TX-reflection-RX is almost always different for different reflections, leading to phase difference). In the same way, as the path travelled by every signal can be different, the signal strength will vary. The receiver will thus receive time shifted versions of the same transmitted signal. A multipath is the sum of separate reflection with about the same Tx/Rx delay. As those multipaths are the sum of all signals arriving at the receiver at about the same moment, a very small shift of receiver position can change the phase and amplitude of each multipath considerably, because the separate signals the multipath signal is consisted of will change phase, leading to more or less signal extinction due to phase difference of the individual paths. This can result in a dramatic change in phase and amplitude of the combined multipath when the receiver is moved.

Since the phase and amplitude and delay of every multipath are changing in time, high quality signal reception is cumbersome, especially for the mobile user.

When CDMA is used for transmission/reception, the multipaths that have a phase difference of more than about the length of 1 chip are typically detectable separately (assuming good auto correlation properties of the CDMA code).

The purpose of a rake receiver, usually comprised in a CDMA receiver apparatus, is to combine coherently the multipaths to increase the receiver performance. To do a coherent combining a channel estimation and correction is needed per multipath. Traditional rakes thus comprise searchers (to search new multipaths), multipath trackers (used for following a shifting multipath signal) and combiner fingers (combining comprises to perform channel estimation, channel correction and to make the estimated and corrected signal available for adding to the final, combined signal so that the different channel corrected streams can be combined in a coherent way with the appropriate gain). The signals captured by the combiner fingers are combined to a combined strong signal in a coherent way.

The current rakes as used in receivers have separate searchers to search for new multipaths. When a multipath is found, fingers of the rake serving as combiner fingers are assigned to the multipath, so that the multipath is included in the multipath combining. Also multipath trackers are assigned to keep the location (position) of the combiner finger as well aligned with the moving multipath as possible. Classically, the searchers scan for energy and assume to have found a multipath when an energy peak is found.

When a CDMA signal is transmitted, every symbol is transmitted as a sequence of chips at a much higher rate than the symbol rate. This sequence of chips is called a PN code. The receiver will regenerate this PN code to detect the symbols. This regenerated PN code must be aligned with the incoming PN code, i.e. the receiver must know the phase of the incoming PN codes, which is not the case when the CDMA receiver is just turned on.

The goal of the chip time acquisition is to recover this phase at the receive side. This can be done for example by trying all possible phases and observing which possibility returns the best result (= most energy).

Evidently, a rake receiver has to be implemented at least partly in hardware, therefore it is a factor that influences the overall production cost and it also has implications for battery life in mobile receivers.

### Aims of the invention

The present invention aims to provide a novel more efficient way of multipath signal receipt and management. In particular, the present invention wishes to provide a cheaper spread spectrum receiver design while at least maintaining signal reception quality.

### Summary of the invention

The present invention concern a rake receiver for searching, tracking and combining multipath signals in a spread spectrum receiver, characterised in that it further comprises a plurality of generic fingers arranged to perform any of functions selected from the group consisting of searching, tracking and combining a multipath signal. Preferably, the function of a generic finger is software or hardware reconfigurable. The function of a specific generic finger is preferably controlled by a finger management block, advantageously a programmable microprocessor.

The present invention also concerns a receiver for receiving spread spectrum signals, characterised in that it comprises a rake receiver as described above.

Another aspect of the present invention concerns a generic finger for searching, tracking and combining a multipath signal in a spread spectrum receiver, characterised in that it is arranged to perform the following functions:
- Descrambling and despreading the multipath signal;
- Calculating the energy of the multipath signal;
- Generating a channel estimation of the multipath signal; and
- Correcting the datastream of the multipath signal to a corrected datastream,
and preferably wherein the generating and correcting functions can be deactivated or activated by software or hardware reconfiguration.

Such a generic finger can be further characterised in that it is suitable for performing searching or tracking when the generating and correcting function are deactivated. Also, it is preferably suitable for acting as a combiner when the generating and correcting function are activated.

Another aspect of the present invention concerns a rake receiver comprising a plurality of generic fingers according to the invention.

Another aspect of the present invention is a method for receiving a multipath spread spectrum transmission, comprising the steps of:
- Providing a rake receiver according to the invention;
- Assign a search, track or combine function to each generic finger, the number of generic fingers assigned to do each of these functions being dependent on reception parameters.

The reception parameters are preferably selected from the group consisting of required receiver quality, battery constraints, signal conditions and geographic location.

A predefined number of generic fingers can be assigned to perform tracking. In this case, a generic finger can be assigned to perform searching when its signal strength is below a predefined threshold and can assigned to perform combining when its signal strength is above said predefined threshold.

The present invention is also related to an integrated circuit comprising a generic finger according to the present invention.

### Short description of the drawings

Fig. 1 represents a rake receiver as known from the prior art.

Fig. 2 represents the rake receiver according to the present invention.

Figs. 3 a and b show the structure of a generic finger as used in the rake receiver according to the present invention. Fig. 3 a represents such a generic finger when activated to act as a combiner, while fig. 3 b show the generic finger when activated to perform searching or tracking (bold lines represent the activated parts of the generic finger).

### Detailed description of the invention

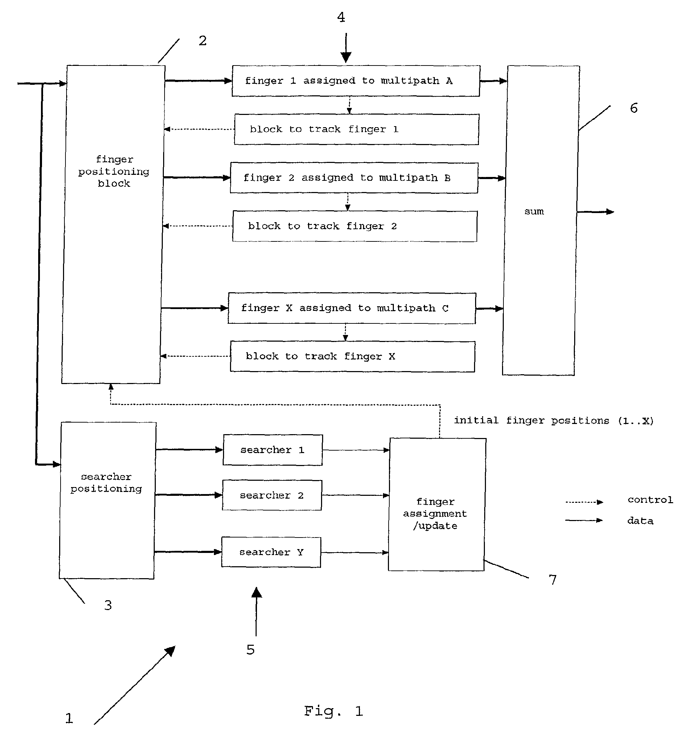

In figure 1 the prior art rake receiver is drawn. In a separate searching block 1, all functions that are needed to perform the searching step are provided in special-purpose hardware, comprising a searcher positioning block 3, multiple searchers 5 and a finger assignment/update block 7 that is responsible for transmitting information to the finger positioning block 2 that regulates the position of the trackers and combiner fingers 4. Each tracker will track a specific multipath that was found by the searching block 1. Multipaths are variable in time, therefore tracking of the signal is essential for good reception. The output of the combiner fingers, the estimated and corrected multipath signal, is selectively combined in summator 6, leading to an enhanced signal. The trackers are responsible for adjusting the combiner finger's position when the receiver position and thus also multipaths position changes.

The searching block 1 only serves for searching. This means that when most trackers and combiners are assigned to a multipath, the searching block is almost inactive, the need for finding new multipaths being minimal. On the other hand, when no multipaths have yet been found, only the searching block will be active (looking for new multipaths) while the trackers and combiners are not, since there are no multipaths to track yet.

This means that very regularly, there is hardware that is not working very efficiently because the search for new multipaths will only result in minimal performance enhancements.

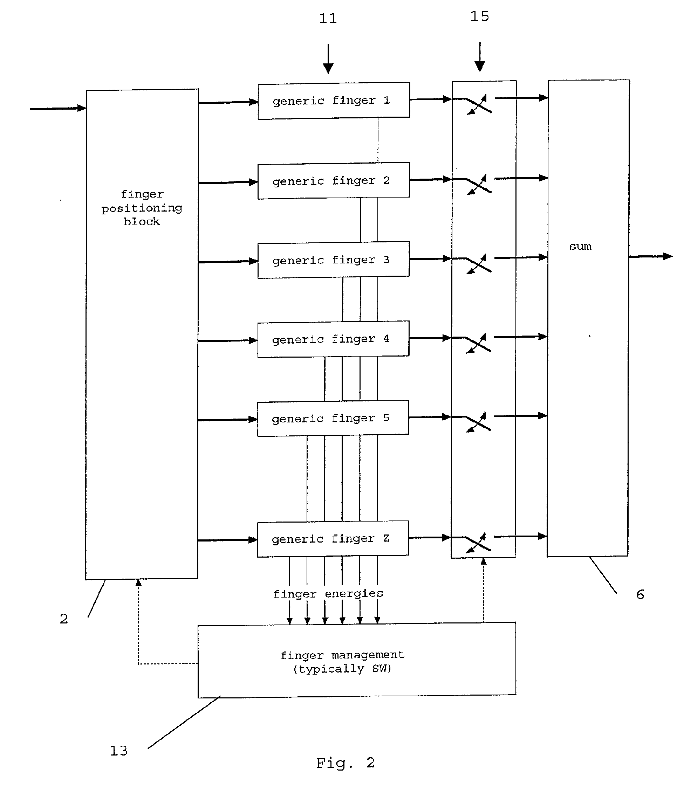

The rake receiver according to the present invention is shown in figure 2. Only one hardware block is present, comprising a multitude of generic fingers 11. All fingers are arranged to perform the three functions necessary to obtain acceptable and enhanced signal quality: searching, tracking and combining.

### Description of a preferred embodiment of the invention

These generic fingers 11 are preferably software reconfigurable so as to set them for either of the three above mentioned functions. This is preferably done with a software finger management block 13. A generic finger can easily be set up as a searcher by positioning a finger and observing the energy at that position. This way, a generic finger can be used to scan a broad range of PN code phases. In this case, the switch (present in switch block 15) corresponding to the generic finger is open. When an energy peak is found, the generic finger (or another, available generic finger) can be set as a tracker for the multipath responsible for the energy peak. When a finger is set up as a combiner finger, all the finger management software has to do to include the signal in the combined signal is to close the corresponding switch in switch block 15 so that the signal enters summator 6. Generic fingers set up as trackers are assigned to track the multipath in order to follow the multipath that is being included in the combined signal. The generic fingers assigned as trackers have an open switch in switch block 15.

In traditional rake architectures, tracking is done by having per combining finger two tracking fingers looking at the energies close to the PN code phase of the combining finger. Obviously, the same can be done with the new architecture by positioning a generic finger before/after the combining finger and observing the energies.

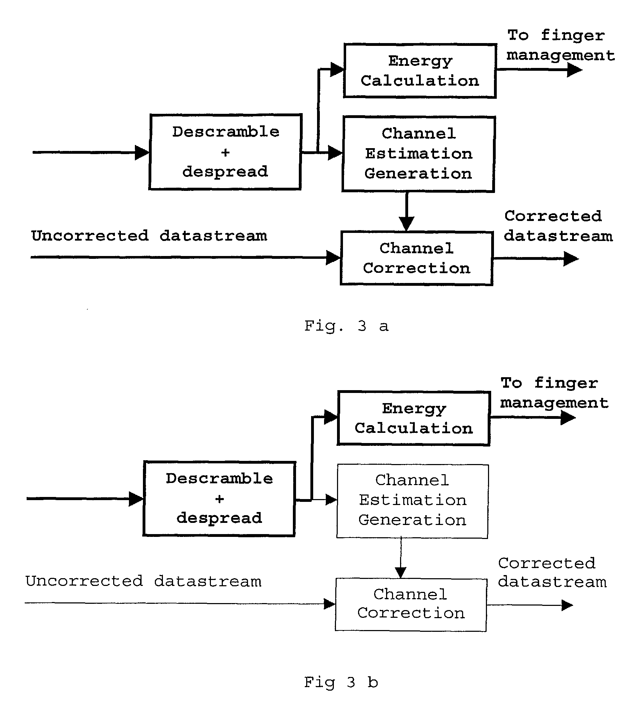

A detail of a generic finger can be seen in figure 3. Fig. 3 a represents such a generic finger when activated to act as a combiner when configured as a combiner, while fig. 3 b show the generic finger when activated to perform searching or tracking (bold lines represent the activated parts of the generic finger). Only energy calculation is needed then, as the signal is not used for combining. The output of the finger is sent to the finger management block 11, which manages use of the fingers accordingly. When set up as a combiner (fig. 3 a), the generic finger also performs channel estimation generation and channel correction, and the corrected datastream result from this is combined (possibly with other corrected signals) to an enhanced signal.

### Results & advantages:

Apart from using less hardware, leading to lower power consumption and lower production cost, the rake receiver is more flexible and can change in real time between numbers of combining, searching or tracking fingers. This can easily be exploited to adapt the rake to the specific environment (channel) the rake is working in. For example, when a receiver according to the present invention is used in an area with variable signal conditions, the finger management block can assign many generic fingers as searchers. A good receiver (with a very high quality crystal) that is not moving will need only a few trackers and searchers (as the signals are relatively constant).

A further advantage of the rake receiver according to the present invention is that a very easy dynamic assignment of fingers to functions that automatically optimizes itself is possible. I.e. suppose the number of trackers is fixed, then the only decision to make is the ratio between combing and searching fingers. 'The algorithm to decide this ratio is very easy, or is even not needed and adapts automatically to the needs: suppose a very simple algorithm that switches a searcher to combiner if a energy threshold is reached and vice versa. Then when there are few combining fingers we will automatically have many searchers to find new ones. When we already have many combiners (i.e. the need for new combiners is low also) we have few searchers to search for new ones. In this way the rake receiver adapts automatically to the circumstances in an optimal way.

Because of the 2 points discussed above, in general there will be less 'generic fingers' than the sum of separate combining fingers, trackers and searchers, leading to a lower production cost.

Further, the finger management block does no real signal processing but configuration work only. Therefore this task can easily be done on a microprocessor. In this way a low power architecture is possible.

## Claims

1. A rake receiver for searching, tracking and combining multipath signals in a spread spectrum receiver, **characterised in that** it comprises a plurality of generic fingers (11) arranged to perform any of functions selected from the group consisting of searching, tracking and combining a multipath signal.

2. The rake receiver of claim 1, wherein the function of a generic finger is software or hardware reconfigurable.

3. The rake receiver of claim 1 or 2, **characterised in that** the function of a specific generic finger is controlled by a finger management block.

4. The rake receiver of claim 3 wherein the finger management block is executed by a programmable microprocessor.

5. A receiver for receiving spread spectrum signals, **characterised in that** it comprises a rake receiver as in any of the claims 1 to 4.

6. A generic finger for searching, tracking and combining a multipath signal in a spread spectrum receiver, **characterised in that** it is arranged to perform the following functions:
• Descrambling and despreading the multipath signal;
• Calculating the energy of the multipath signal;
• Generating a channel estimation of the multipath signal; and
• Correcting the datastream of the multipath signal to a corrected datastream.

7. The generic finger of claim 6, wherein the generating and correcting functions can be deactivated or activated by reconfiguration selected from the group consisting of software reconfiguration and hardware reconfiguration.

8. The generic finger of claim 6 or 7, **characterised in that** it is suitable for performing searching or tracking when the generating and correcting function are deactivated.

9. The generic finger of claim 6 or 7, **characterised in that** it is suitable to act as a combiner when the generating and correcting function are activated.

10. A rake receiver comprising a plurality of generic fingers as in any of the claims 6 to 9.

11. A method for receiving a multipath spread spectrum transmission, comprising the steps of:
• Providing a rake receiver as in any of the claims 1 to 4;
• Assign a search, track or combine function to each generic finger, the number of generic fingers assigned to do each of these functions being dependent on reception parameters.

12. The method as in claim 11, wherein the reception parameters are selected from the group consisting of required receiver quality, battery constraints, signal conditions and geographic location.

13. The method as in claim 11, wherein a predefined number of generic fingers is assigned to perform tracking.

14. The method as in claim 13, wherein a generic finger is assigned to perform searching when its signal strength is below a predefined threshold and is assigned to perform combining when its signal strength is above said predefined threshold.

15. An integrated circuit comprising a generic finger as in any of the claims 6 to 9.
